# EUROPÄISCHE PATENTSCHRIFT

(11) **EP 1 377 412 B1**
(45) Veröffentlichungstag und Bekanntmachung des Hinweises auf die Patenterteilung: **18.07.2007**
(21) Anmeldenummer: 02706672.9
(22) Anmeldetag: 06.02.2002
(51) Int. Cl.: B24B 55/10, B23Q 11/00, F16L 25/00

(54) **STUTZEN ZUM ANSCHLUSS EINES ABSAUGSCHLAUCHS AN EINE HANDWERKZEUGMASCHINE**
CONNECTING SLEEVE FOR CONNECTING A SUCTION HOSE TO A HAND MACHINE TOOL
MANCHON POUR RACCORDER UN FLEXIBLE D'ASPIRATION A UNE MACHINE-OUTIL PORTATIVE

(30) Priorität: 03.04.2001 DE 10116501
(43) Veröffentlichungstag der Anmeldung: 07.01.2004
(73) Patentinhaber: ROBERT BOSCH GMBH, 70442 Stuttgart (DE)
(72) Erfinder: WUENSCH, Steffen, 71088 Holzgerlingen (DE)
(74) Vertreter: Daub, Thomas
(86) Internationale Anmeldenummer: PCT/DE2002/000421
(87) Internationale Veröffentlichungsnummer: WO 2002/081148

(56) Entgegenhaltungen:
- EP-A- 0 558 817
- DE-A- 3 121 496
- DE-B- 1 234 463
- DE-U- 29 508 874
- FR-A- 2 383 740
- GB-A- 969 078

## Beschreibung

### Stand der Technik

Die Erfindung geht aus von einem Stutzen zum Anschluß eines' Absaugschlauchs an eine Handwerkzeugmaschine nach dem Oberbegriff des Anspruchs 1.

Es ist aus der Praxis bekannt, bei Handwerkzeugmaschinen, insbesondere bei Exzenterschleifern, eine Absaugvorrichtung für mittels der Handwerkzeugmaschine abgetragenes Material einzusetzen. Ein Absaugschlauch der Absaugvorrichtung, welcher in der Regel ein stutzenartiges Anschlußstück aufweist, ist hierzu über einen Stutzen an die Handwerkzeugmaschine angeschlossen. An den Stutzen, der mit der Handwerkzeugmaschine lösbar verbunden sein kann, kann entweder das stutzenartige Anschlußstück des Absaugschlauchs direkt oder, wenn das stutzenartige Anschlußstück einen Durchmesser hat, der nicht mit demjenigen des Stutzens korrespondiert, über ein entsprechend ausgebildetes, gestuftes, zusätzliches Zwischenstück angekoppelt sein.

Aus der Druckschrift EP 0 558 817 A2 ist zum Anschluß einer Werkzeugmaschine an eine Absaugeinrichtung ein Einsatzkörper aus Gummi bekannt, der über ein Dichtungsteil mit der Umfangfläche eines Saugschlauches zusammenwirkt. Dieser Einsatzkörper weist zum Befestigen am Anschlußstutzen der Werkzeugmaschine ein Befestigungsteil mit grundsätzlich bekannten Haltemitteln auf. Zu dem Dichtungsteil gehört wenigstens eine Dichtlippe, die einen Durchbruch hat, dessen Durchmesser kleiner ist als der des einzuführenden Saugschlauches. Mit Hilfe dieses Einsatzkörpers ist es möglich, unterschiedlich dicke Saugschläuche dichtend aufzunehmen.

Ein weiterer Rohling-Adapter ist aus der Druckschrift GB 969 078 bekannt, der individuell mit Hilfe von Schneidwerkzeugen für die Verbindung von Kabeln oder Rohrleitungen mit unterschiedlichen Durchmessern angepaßt werden kann.

### Vorteile der Erfindung

Die Erfindung geht aus von einem Stutzen zum Anschluß eines Absaugschlauchs an eine Handwerkzeugmaschine, insbesondere eine handgeführte Schleifmaschine, der ein erstes Ende zur Verbindung mit der Handwerkzeugmaschine und ein zweites Ende zur Verbindung mit einem Anschlußstück des Absaugschlauchs aufweist.

Es wird vorgeschlagen, daß das zweite Ende derart als Adapter ausgebildet ist, daß an dieses Ende Anschlußstücke mit unterschiedlich ausgebildeten Querschnitten direkt ankoppelbar sind. Bei Verwendung eines derartigen Stutzens besteht die Möglichkeit, unterschiedlich ausgebildete Absaugschläuche und damit in der Regel unterschiedlich ausgebildete Anschlußstücke der Absaugschläuche an eine Handwerkzeugmaschine anzuschließen, wobei der bisher erforderliche Einsatz eines zusätzlichen Zwischenstücks entfällt.

Der Begriff "Querschnitt" ist in seinem weitesten Sinne zu verstehen und umfaßt daher sowohl die geometrische Gestalt als auch die Dimensionierung des Anschlußstücks.

Das zweite Ende des Stutzens nach der Erfindung kann beispielsweise derart ausgebildet sein, daß an dieses Anschlußstücke mit einem ovalen, einem kreisrunden oder auch einem anderen geometrischen Querschnitt ankoppelbar sind. Es ist aber auch denkbar, daß das zweite Ende des Stutzens nach der Erfindung derart verformbar ausgebildet ist, daß auf dieses Anschlußstücke unterschiedlicher geometrischer Gestalt und/oder unterschiedlicher Dimensionierung aufgesteckt werden können.

Das Anschlußstück des Absaugschlauchs kann entweder mit dem Absaugschlauch verbunden und stutzenartig ausgebildet oder auch Teil des Absaugschlauchs selbst sein.

Das Anschlußstück des Absaugschlauchs wird vorzugsweise auf das als Adapter ausgebildete zweite Ende aufgesteckt. Denkbar ist es aber auch, daß das Anschlußstück über einen Bajonettverschluß oder eine Schraubverbindung an das zweite Ende des Stutzens ankoppelbar ist.

Eine problemlose Ankopplung stutzenartiger Anschlußstücke unterschiedlicher Durchmesser läßt sich vorteilhaft verwirklichen, wenn der Adapter derart zweischalig aufgebaut ist, daß er ein inneres Rohrstück und ein äußeres Rohrstück umfaßt, welche im wesentlichen konzentrisch angeordnet sind. Bei dieser vorteilhaften Ausführungsform der Erfindung dient das äußere Rohrstück zur Ankopplung eines Anschlußstücks größeren Durchmessers und das innere Rohrstück zur Ankopplung eines Anschlußstücks geringeren Durchmessers. Im Betrieb erfolgt der Materialtransport vorteilhaft über das innere Rohrstück.

Der Stutzen weist nach der Erfindung vorteilhaft mindestens eine Ansaugöffnung zum Ansaugen von Fremdluft auf. Eine solche Ansaugöffnung hat die Wirkung, daß die über den Absaugschlauch in den Stutzen eingeleitete Saugkraft nicht ausschließlich auf zum Beispiel einen Exzenterschleifer bzw.

Bauteile desselben wirkt, sondern daß zusätzlich über die Ansaugöffnung aus der Umgebung Fremdluft angesaugt wird. Dies führt zu einer Minderung der über das erste Ende des Stutzens in den Exzenterschleifer eingeleitenden Saugkraft, so daß verschleißgefährdete Bauteile des Exzenterschleifers entlastet werden.

Um eine gute Klemmung und damit eine sichere Verbindung zwischen einem Anschlußstück geringeren Durchmessers und dem Stutzen zu erreichen, kann sich das innere Rohrstück in Richtung des Anschlußstücks konisch verjüngen. In diesem Fall wird ein Anschlußstück entsprechenden Durchmessers über die Außenseite des inneren Rohrstücks mit dem Stutzen verbunden. Es ist auch denkbar, daß sich das innere Rohrstück konisch aufweitet. Dann wird ein Anschlußstück entsprechenden Durchmessers über die Innenseite des inneren Rohrstücks mit dem Stutzen verbunden. Das innere Rohrstück kann sich aber auch stufenweise verjüngen oder aufweiten. Auch das äußere Rohrstück kann konisch ausgebildet sein oder eine Stufung aufweisen. Bei einer Verjüngung oder einer Aufweitung des inneren Rohrstücks und/oder des äußeren Rohrstücks ist es insbesondere möglich, Anschlußstücke unterschiedlichen Durchmessers auf ein und dasselbe Rohrstück aufzusetzen.

An dem äußeren Rohr und/oder an dem inneren Rohr kann jeweils mindestens ein O-Ring angeordnet sein. Dieser kann jeweils an der Innen- oder an der Außenseite des betreffenden Rohrstücks angeordnet sein und erfüllt im wesentlichen eine Klemmfunktion zwischen dem als Adapter ausgebildeten zweiten Ende des Stutzens und dem Anschlußstück, hat aber auch eine Dichtfunktion. Der O-Ring kann alternativ oder zusätzlich zur konischen Ausbildung des betreffenden Rohrstücks vorgesehen sein.

Wie bereits vorher erwähnt, besteht in der Praxis die Gefahr eines hohen Verschleißes oder es kommt zu einem zu starken Ansaugen des Schleiftellers auf das Werkstück bei geringer Bewegung des Geräts, insbesondere beim Einsatz von Absaugschläuchen großen Durchmessers. Daher ist die Ansaugöffnung zweckmäßig so angeordnet, daß sie zu einem zwischen dem inneren Rohrstück und dem äußeren Rohrstück angeordneten Ringraum führt, der an der absaugschlauchseitigen Stirnseite des Stutzens offen ist. Dies hat die Wirkung, daß beim Einsatz von Anschlußstücken, welche auf das innere Rohrstück aufzustecken sind und mithin einen vergleichsweise geringen Durchmesser aufweisen, die volle Saug-Leistung über das erste Ende des Stutzens in die Handwerkzeugmaschine eingeleitet wird, und daß bei Einsatz eines Anschlußstücks größeren Durchmessers, welches auf das äußere Rohrstück gesteckt wird, über den Ringraum und die Ansaugöffnung eine Entlastung der saugbelasteten Bauteile der Handwerkzeugmaschine eintritt.

Um den Grad der mittels der Ansaugöffnung eintretenden Entlastung den jeweiligen Anforderungen anpassen zu können, weist der Stutzen vorteilhaft Mittel zur Änderung des Öffnungsgrads der Ansaugöffnung auf.

Die Mittel zur Änderung des Öffnungsgrads der Ansaugöffnung können beispielsweise einen Einstellring umfassen. Ein beispielsweise auf das äußere Rohrstück aufgesteckter Einstellring stellt ein für einen Benutzer leicht handhabbares Bauteil zur Einstellung des Öffnungsgrads der Ansaugöffnung und damit der über diese Öffnung angesaugten Fremdluftmenge dar. Alternativ kann der Einstellring über ein Gewinde auf das zweite Ende des Stutzens aufgeschraubt sein.

Es ist aber auch denkbar, daß der Öffnungsgrad der Ansaugöffnung mittels eines axial, radial oder in Umfangsrichtung verschiebbaren Schiebers veränderbar ist.

Bei einer konstruktiv einfach zu verwirklichenden Ausführungsform des Stutzens nach der Erfindung hat der Einstellring mindestens eine Lasche, mittels der die Ansaugöffnung zumindest teilweise abdeckbar ist.

Beispielsweise ist die Ansaugöffnung als am Umfang des äußeren Rohrstücks angeordnetes Fenster ausgebildet, das an dem dem Absaugschlauch abgewandten Ende des äußeren Rohrstücks liegt. Bei dieser Ausführungsform kann die Ansaugöffnung beispielsweise durch eine axial ausgerichtete und am Umfang des äußeren Rohrstücks anliegende Lasche des Einstellrings verdeckt werden.

Alternativ oder zusätzlich kann die Ansaugöffnung beispielsweise als ein an der Innenwandung des äußeren Rohrstücks angeordneter, nutartiger Kanal ausgebildet sein, welcher zur absaugschlauchseitigen Stirnseite des Stutzens führt. Der Kanal kann dann einen stirnseitigen Öffnungsquerschnitt haben, der mittels einer radial angeordneten Lasche des Einstellrings zumindest teilweise abdeckbar ist, so daß der Grad der Fremdluftansaugung einstellbar ist. Denkbar ist ferner, daß die Lasche an einer geeigneten, axialen Stelle radial in den Kanal eingreift, und beispielsweise in eine Ringnut geführt ist.

Ansaugöffnungen können aber auch zwischen laschenartigen Vorsprüngen vorgesehen sein, die an dem äußeren Rohrstück an dessen absaugschlauchseitigen Ende radial nach innen gerichtet nach Art von Kreisbogensegmenten ausgebildet sind und an deren inneren Begrenzung ein Anschlußstück des Absaugschlauchs mit hoher Flächenpressung verklemmt werden kann.

Um den Einstellring bei der Montage des Stutzens komfortabel auf das zweite Ende aufstecken zu können, hat dieser vorteilhaft mindestens einen axial ausgerichteten Schlitz. Der Schlitz verleiht dem Einstellring federelastische Eigenschaften. Dies hat natürlich zur Voraussetzung, daß der Einstellring aus einem entsprechenden Werkstoff, z.B. einem Kunststoff mit federelastischen Eigenschaften, gefertigt ist. Des weiteren ist es denkbar, daß der Schlitz mit einem Schlitz des äußeren Rohrstücks korrespondiert, der die Ansaugöffnung bildet.

Ferner kann der Einstellring am Anschlußteil des Absaugschlauchs befestigt oder mit diesem einstückig ausgeführt sein.

Damit ein Benutzer den Öffnungsgrad der Ansaugöffnung leicht erkennen kann, weist der Stutzen zweckmäßig eine entsprechende Skala auf. Die Skala kann zudem zur automatischen oder zumindest teilautomatisierten Erkennung und Einstellung des Öffnungsgrads genutzt werden, beispielsweise indem über eine Sensoreinheit die Stellung der Skala erfaßt und der Einstellring mit einer Steuer- und/oder Regeleinheit über einen Aktuator auf eine gewünschte Stellung eingestellt werden kann. Die Sensoreinheit und der Aktuator können dabei von verschiedenen, dem Fachmann als sinnvoll erscheinenden Einheiten gebildet sein, beispielsweise kann die Sensoreinheit von einer optischen Einheit und der Aktuator von einem Elektromagneten gebildet sein usw. Die Skala kann von zusätzlich am Stutzen befestigten Bauteilen gebildet oder kann vorteilhaft einstükkig an den Stutzen angeformt sein, wodurch zusätzliche Bauteile und Montageaufwand eingespart werden können.

Die Erfindung hat ferner eine Handwerkzeugmaschine zum Gegenstand, die einen vorstehend beschriebenen Stutzen aufweist. Hierbei ist der Stutzen in der Regel ein separates Bauteil, der an einer entsprechenden Öffnung am Gehäuse der Handwerkzeugmaschine aufgesteckt ist. Es ist aber auch denkbar, daß der Stutzen im wesentlichen einstückig mit einem Bauteil der Handwerkzeugmaschine, wie beispielsweise einem Gehäuseteil, ausgeführt ist.

### Zeichnung

Weitere Vorteile ergeben sich aus der folgenden Zeichnungsbeschreibung. In der Zeichnung sind Ausführungsbeispiele des Stutzens nach der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer ersten Ausführungsform eines Stutzens nach der Erfindung im Teilschnitt;
- Fig. 2: eine schematische Aufsicht des Stutzens nach Fig. 1;
- Fig. 3: eine schematische Stirnansicht des Stutzens nach Fig. 1;
- Fig. 4: eine schematische Stirnansicht eines Einstellrings des Stutzens nach Fig. 1;
- Fig. 5: eine zweite Ausführungsform in einer Fig. 1 entsprechenden Darstellung und
- Fig. 6: einen schematisch dargestellten Exzenterschleifer.

### Beschreibung der Ausführungsbeispiele

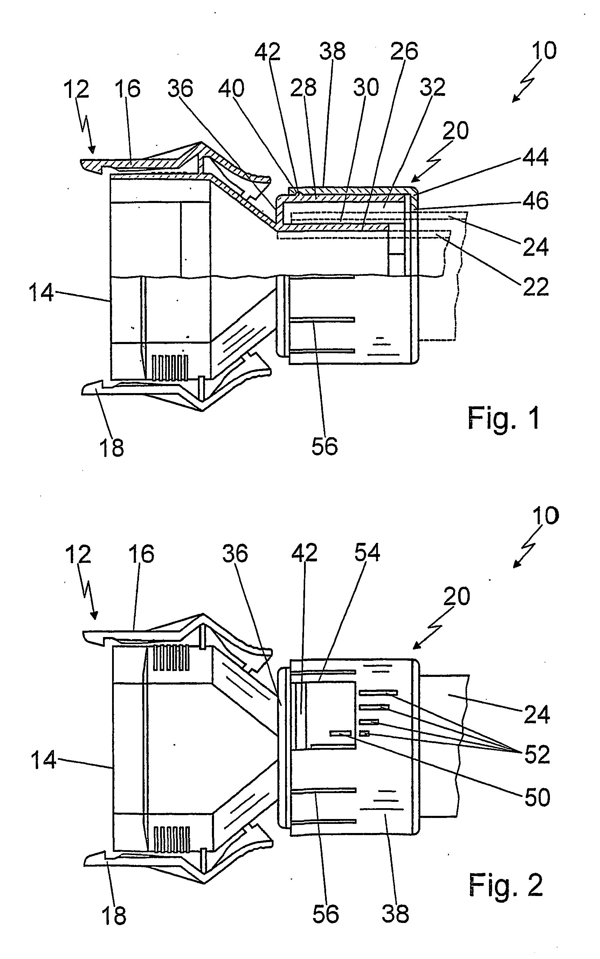

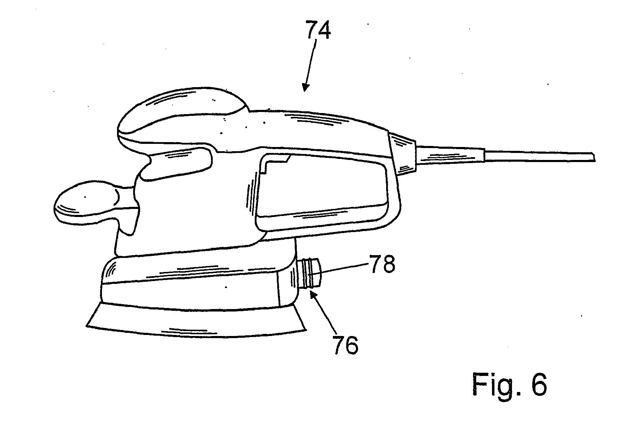

In Fig. 1 bis 4 ist ein aus Kunststoff gefertigter Stutzen 10 zum Anschluß eines Absaugschlauchs an einen handgeführten Exzenterschleifer 74 dargestellt. Der Stutzen 10 hat hierzu ein erstes Ende 12 mit einer Öffnung 14, die im wesentlichen einen ovalen Querschnitt aufweist. Das erste Ende 12 kann an einem korrespondierenden Stutzen 76 des Exzenterschleifers 74 befestigt und mittels zweier angeformter Rastmittel 16 und 18 an einer Ringnut 78 des Stutzens 76 eingerastet werden (Fig. 6).

Das erste Ende 12 mit im wesentlichen ovalem Querschnitt verjüngt sich in der der Öffnung 14 abgewandten Richtung zu einem zweiten Ende 20, das zur Verbindung mit einem dem Absaugschlauch zugeordneten stutzenartig ausgebildeten Anschlußstück 22 geringeren Durchmessers oder einem entsprechend ausgebildeten Anschlußstück 24 größeren Durchmessers dient. Das zweite Ende 20 ist derart als Adapter ausgebildet, daß an dieses zum einen das Anschlußstück 22 geringeren Durchmessers und zum anderen das Anschlußstück 24 größeren Durchmessers direkt ankoppelbar ist.

Das zweite Ende 20 weist ein inneres Rohrstück 26 und ein äußeres Rohrstück 28 auf, welche konzentrisch angeordnet sind. Das innere Rohrstück 26 dient zur Ankopplung des Anschlußstücks 22 geringeren Durchmessers an den Stutzen 10. Das Anschlußstück 22 wird hierzu derart mit dem Stutzen 10 verbunden, daß es an der Innenwandung des inneren Rohrstücks 26 verklemmt wird, wie Fig. 1 zu entnehmen ist.

Das äußere Rohrstück 28 dient zur Ankopplung des Anschlußstücks 24 größeren Durchmessers an den Stutzen 10. Das Anschlußstück 24 wird hierzu an der Innenwandung des äußeren Rohrstücks 28 verklemmt. Dabei verbleibt zwischen dem Anschlußstück 24 und dem inneren Rohrstück 26 ein Ringraum 30.

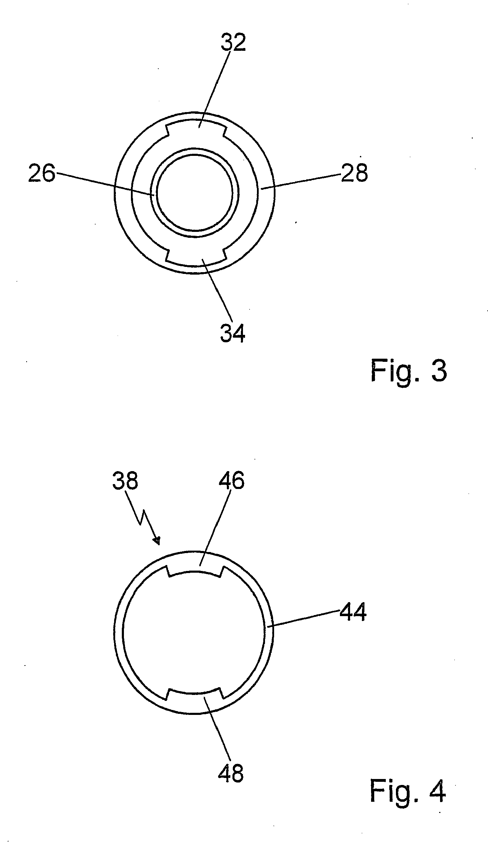

An der Innenwandung des äußeren Rohrstücks 28 sind zwei axial ausgerichtete, nutenartige Kanäle 32 und 34 ausgebildet, die um 180° zueinander versetzt sind und von der anschlußstückseitigen Stirnseite des Stutzens 10 zu einer radial ausgerichteten, ringartigen Wand 36 führen, welche sich an das äußere Rohrstück 28 anschließt und das äußere Rohrstück 28 und das innere Rohrstück 26 miteinander verbindet. Die Ausbildung des Öffnungsquerschnitts der Kanäle 32 und 34 an der anschlußstückseitigen Stirnseite des Stutzens 10 ist Fig. 3 zu entnehmen.

Die Kanäle 32 und 34 bilden jeweils eine Ansaugöffnung für Fremdluft, welche bei Einsatz des Anschlußstücks 24 größeren Durchmessers über die stirnseitige Öffnung der Kanäle 32, 34, der Kanäle 32, 34 selbst und den zwischen dem Anschlußstück 24 und dem inneren Rohrstück 26 angeordneten Ringraum 30 angesaugt werden kann. Bei Einsatz des Anschlußstücks 22 geringeren Durchmessers erfolgt keine Fremdluftansaugung über die Kanäle 32 und 34.

Zur Einstellung der Menge an über die Kanäle 32 und 34 angesaugter Fremdluft weist der Stutzen 10 einen aus Kunststoff gefertigten Einstellring 38 auf, dessen Stirnansicht Fig. 4 zu entnehmen ist. Der Einstellring 38, der axial ausgerichtete Schlitze 56 aufweist und dadurch vorteilhaft federelastisch ausgebildet ist, ist auf das äußere Rohrstück 28 aufgesteckt und hat an der Innenwandung eine Ringnut 40, in welche eine an der Außenseite des äußeren Rohrstücks 28 angeordnete Ringwulst 42 eingreift (Fig. 1 und 2). Der Einstellring 38 ist auf dem Stutzen 10 drehbar gelagert und ist in axialer Richtung über die Ringwulst 42 und die Ringnut 40 gesichert.

Des weiteren weist der Einstellring 38 einen Ringbund 44 auf, welcher an der absaugschlauchseitigen Stirnseite des äußeren Rohrstücks 28 anliegt. An dem Ringbund 44 sind zwei Laschen 46 und 48 angeordnet, mittels welcher die stirnseitigen Öffnungen der Kanäle 32 und 34 abdeckbar sind, so daß die Menge an über die Kanäle 32 und 34 angesaugter Fremdluft einstellbar ist. In Fig. 1 ist die Schließstellung dargestellt, bei der die Lasche 46 die Öffnung des Kanals 32 vollständig abdeckt.

Zum Ablesen des Öffnungsgrads der Öffnungen der Kanäle 32 und 34 und damit der Menge an über die Kanäle 32 und 34 angesaugter Fremdluft ist an der Außenseite des äußeren Rohrstücks 28 eine Markierung 50 angeformt, welche mit einer an der Außenseite des Einstellrings 38 angeordneten Skala 52 zusammenwirkt. Die Markierung 50 ist innerhalb eines fensterartigen Ausschnitts 54 des Einstellrings 38 angeordnet. Die Skala 52 und die Markierung 50 werden von angeformten Stegen gebildet.

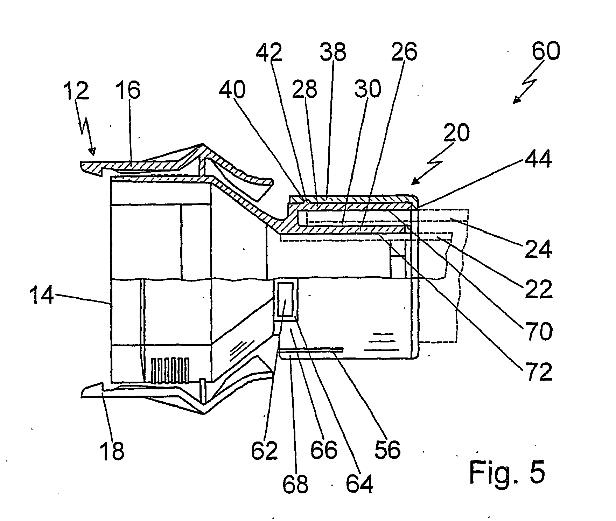

In Fig. 5 ist eine alternative Ausführungsform eines Anschlußstutzens 60 dargestellt. Im wesentlichen gleichbleibende Bauteile sind in den dargestellten Ausführungsbeispielen grundsätzlich mit den gleichen Bezugszeichen beziffert. Ferner kann bezüglich gleichbleibender Merkmale und Funktionen auf die Beschreibung zum Ausführungsbeispiel nach Fig. 1 bis 4 verwiesen werden.

Der Stutzen 60 unterscheidet sich von dem Stutzen nach Fig. 1 bis 4 dadurch, daß er fünf über den Umfang verteilte Ansaugöffnungen 62 aufweist, die an dem dem Anschlußstück 24 bzw. 22 abgewandten Ende des äußeren Rohrstücks 28 angeordnet sind und die zu einem Ringraum 30 führen, der zwischen dem inneren Rohrstück 26 und dem äußeren Rohrstück 28, insbesondere zwischen dem inneren Rohrstück 26 und dem Anschlußstück 24 größeren Durchmessers, angeordnet ist. Diese Anordnung der Ansaugöffnungen 62 hat gegenüber dem oben beschriebenen Ausführungsbeispiel nach Fig. 1 bis 4 strömungstechnische Vorteile.

Der Öffnungsgrad der Ansaugöffnungen 62 ist wiederum mittels eines Einstellrings 38 veränderbar. Im geöffneten Zustand sind die Ansaugöffnungen 62 innerhalb von Fenstern 64 des Einstellrings 38 angeordnet. Bei Drehung des Einstellrings 38 werden- Laschen 66 und 68 des Einstellrings 38 über die Ansaugöffnungen 62 gebracht. Zwischen den Laschen 66 und 68, welche entsprechend den Ansaugöffnungen 62 jeweils fünffach vorliegen, ist jeweils ein Schlitz 56 angeordnet, welcher gewährleistet, daß bei Einsatz des Anschlußstücks 24 größeren Durchmessers auch in Schließstellung des Einstellrings 38 eine geringe Menge Fremdluft über die Ansaugöffnungen 62 angesaugt wird. Zudem verleihen die Schlitze 56 dem Einstellring 38 federelastische Eigenschaften, wodurch dieser komfortabel auf das äußere Rohrstück 28 aufgesteckt werden kann.

Des weiteren weist der Stutzen 60 zur Erhöhung der Klemmwirkung zwischen dem Stutzen 60 und dem Anschlußstück 24 größeren Durchmessers bzw. dem Anschlußstück 22 geringeren Durchmessers an der Innenwandung des äußeren Rohrstücks 28 einen O-Ring 70 und an der Innenwandung des inneren Rohrstücks 26 einen O-Ring 72 aus Gummi auf.

### Bezugszeichen

- 10: Stutzen
- 12: Erstes Ende
- 14: Öffnung
- 16: Rastmittel
- 18: Rastmittel
- 20: Zweites Ende
- 22: Anschlußstück
- 24: Anschlußstück
- 26: Inneres Rohrstück
- 28: Äußeres Rohrstück
- 30: Ringraum
- 32: Kanal
- 34: Kanal
- 36: Wand
- 38: Einstellring
- 40: Ringnut
- 42: Ringwulst
- 44: Ringbund
- 46: Lasche
- 48: Lasche
- 50: Markierung
- 52: Skala
- 54: Ausschnitt

- 56: Schlitz

- 60: Stutzen
- 62: Ansaugöffnung
- 64: Fenster
- 66: Lasche
- 68: Lasche
- 70: O-Ring
- 72: O-Ring
- 74: Exzenterschleifer
- 76: Stutzen
- 78: Ringnut

## Patentansprüche

1. Stutzen zum Anschluß eines Absaugschlauchs an eine Handwerkzeugmaschine, insbesondere eine handgeführte Schleifmaschine, mit einem ersten Ende (12) zur Verbindung mit der Handwerkzeugmaschine und einem zweiten Ende (20) zur Verbindung mit einem Anschlußstück (22, 24) des Absaugschlauchs, wobei das zweite Ende (20) derart als Adapter ausgebildet ist, daß an dieses Anschlußstücke (22, 24) mit unterschiedlich ausgebildeten Querschnitten direkt ankoppelbar sind, wobei der Adapter (20) derart zweischalig aufgebaut ist und wobei er ein inneres Rohrstück (26) und ein äußeres Rohrstück (28) umfaßt, welche im wesentlichen konzentrisch angeordnet sind, wobei das äußere Rohrstück zur Ankopplung eines Anschlußstücks größeren Durchmessers und das innere Rohrstück zur Ankopplung eines Anschlußstücks geringeren Durchmessers dient, **gekennzeichnet durch** mindestens eine Ansaugöffnung (32, 34; 62) zum Ansaugen vom Fremdluft bei Einsatz eines Anschlußstücks 24 größeren Durchmessers.

2. Stutzen nach Anspruch 1, **dadurch gekennzeichnet, daß** der Adapter (20) zur Ankopplung stutzenartiger Anschlußstücke (22, 24) unterschiedlichen Durchmessers ausgelegt ist.

3. Stutzen nach einem der vorhergehenden Ansprüche, **dadurch gekennzeichnet, daß** sich zumindest das innere Rohrstück in Richtung des Anschlußstücks konisch verjüngt.

4. Stutzen nach einem der vorhergehenden Ansprüche, **dadurch gekennzeichnet, daß** an dem äußeren Rohrstück (28) mindestens ein O-Ring (70) angeordnet ist.

5. Stutzen nach einem der vorhergehenden Ansprüche, **dadurch gekennzeichnet, daß** an dem inneren Rohrstück (26) mindestens ein O-Ring (72) angeordnet ist.

6. Stutzen zumindest nach einem der vorhergehenden Ansprüche, **dadurch gekennzeichnet, daß** die Ansaugöffnung (32, 34; 62) zu einem zwischen dem inneren Rohrstück (26) und dem äußeren Rohrstück (28) angeordneten Ringraum (30) führt, der an der absaugschlauchseitigen Stirnseite des Stutzens offen ist.

7. Stutzen nach einem der vorhergehenden Ansprüche, **gekennzeichnet durch** zumindest ein Mittel (38) zur Änderung des Öffnungsgrads der Ansaugöffnung (32, 34; 62).

8. Stutzen nach Anspruch 7, **dadurch gekennzeichnet, daß** die Mittel zur Änderung des Öffnungsgrads der Ansaugöffnung (32, 34; 62) einen Einstellring (38) umfassen.

9. Stutzen nach Anspruch 8, **dadurch gekennzeichnet, daß** der Einstellring (38) mindestens eine Lasche (46, 48; 66, 68) hat, mittels der die Ansaugöffnung (32, 34; 62) zumindest teilweise abdeckbar ist.

10. Stutzen nach Anspruch 8 oder 9, **dadurch gekennzeichnet, daß** der Einstellring (38) mindestens einen axial ausgerichteten Schlitz (56) hat.

11. Stutzen nach einem der Ansprüche 7 bis 10, **gekennzeichnet durch** eine Skala (52) zur Kennzeichnung des Öffnungsgrads der Ansaugöffnung (32, 34; 62).

12. Handwerkzeugmaschine mit einem Stutzen nach einem der Ansprüche 1 bis 11.

## Claims

1. Connecting sleeve for connecting a suction hose to a portable power tool, in particular a hand-held sanding machine, having a first end (12) for connecting to the portable power tool and a second end (20) for connecting to a connection piece (22, 24) of the suction hose, the second end (20) being designed as an adapter in such a way that connection pieces (22, 24) with cross sections of different design can be directly coupled to said adapter, the adapter (20) being of twin shell construction and comprising an inner tube piece (26) and an outer tube piece (28) which are arranged essentially concentrically, the outer tube piece serving for coupling a connection piece of larger diameter and the inner tube piece serving for coupling a connection piece of smaller diameter, **characterized by** at least one intake opening (32, 34; 62) for drawing in external air when using a connection piece (24) of larger diameter.

2. Connecting sleeve according to Claim 1, **characterized in that** the adapter (20) is designed for coupling connecting-sleeve-like connection pieces (22, 24) of different diameter.

3. Connecting sleeve according to either of the preceding claims, **characterized in that** at least the inner tube piece narrows conically in the direction of the connection piece.

4. Connecting sleeve according to one of the preceding claims, **characterized in that** at least one O-ring (70) is arranged on the outer tube piece (28).

5. Connecting sleeve according to one of the preceding claims, **characterized in that** at least one 0-ring (72) is arranged on the inner tube piece (26).

6. Connecting piece at least according to one of the preceding claims, **characterized in that** the intake opening (32, 34; 62) leads to an annular space (30) which is arranged between the inner tube piece (26) and the outer tube piece (28) and is open at the suction-hose-side end face of the connecting sleeve.

7. Connecting sleeve according to one of the preceding claims, **characterized by** at least one means (38) for changing the degree of opening of the intake opening (32, 34; 62) .

8. Connecting sleeve according to Claim 7, **characterized in that** the means for changing the degree of opening of the intake opening (32, 34; 62) comprise a setting ring (38).

9. Connecting sleeve according to Claim 8, **characterized in that** the setting ring (38) has at least one lug (46, 48; 66, 68), by means of which the intake opening (32, 34; 62) can be at least partly covered.

10. Connecting sleeve according to Claim 8 or 9, **characterized in that** the setting ring (38) has at least one axially oriented slot (56).

11. Connecting sleeve according to one of Claims 7 to 10, **characterized by** a scale (52) for identifying the degree of opening of the intake opening (32, 34; 62).

12. Portable power tool having a connecting sleeve according to one of Claims 1 to 11.

## Revendications

1. Manchon pour raccorder un tuyau d'aspiration à une machine portative, notamment une ponceuse, comprenant :
- une première extrémité (12) pour liaison à la machine portative une seconde extrémité (20) pour liaison à une pièce de raccordement (22, 24) du tube d'aspiration, cette seconde extrémité (20) étant constituée en adaptateur, pouvant recevoir directement des pièces de raccordement (22, 24) de sections différentes, l'adaptateur (20) ayant la forme d'une double coquille comprenant une pièce tubulaire interne (26) et une pièce tubulaire externe (28) essentiellement concentriques, la pièce tubulaire externe servant à accoupler une pièce de raccordement de plus grand diamètre, tandis que la pièce tubulaire interne sert à accoupler une pièce de raccordement de diamètre plus faible,
**caractérisé en ce qu'**
au moins une ouverture d'aspiration (32, 34 ; 62) permet d'aspirer de l'air extérieur, lorsqu'on utilise une pièce de raccordement (24) de plus grand diamètre.

2. Manchon selon la revendication 1,
**caractérisé en ce que**
l'adaptateur (20) est conçu pour l'accouplement de pièces de raccordement (22, 24) en forme de tubulures présentant des diamètres différents.

3. Manchon selon la revendication 1 ou 2,
**caractérisé en ce qu'**
au moins la pièce tubulaire interne (20) se rétrécit en cône en direction de la pièce de raccordement.

4. Manchon selon une des revendications précédentes,
**caractérisé en ce que**
la pièce tubulaire externe (28) porte au moins un joint torique « O.Ring » (70).

5. Manchon selon une des revendications précédentes,
**caractérisé en ce que**
la pièce tubulaire interne (26) porte au moins un joint torique « O.Ring » (72).

6. Manchon au moins selon une des revendications précédentes,
**caractérisé en ce que**
l'ouverture d'aspiration (32, 34 ; 62) conduit à une chambre annulaire (30) disposée entre la pièce tubulaire interne (26) et la pièce tubulaire externe (28) et ouverte sur la face frontale de la tubulure située du côté du tuyau d'aspiration.

7. Manchon selon une des revendications précédentes,
**caractérisé par**
au moins un moyen (38) pour faire varier le degré d'ouverture de l'ouverture d'aspiration (32, 34 ; 62).

8. Manchon selon la revendication 7,
**caractérisé en ce que**
les moyens pour faire varier le degré d'ouverture de l'ouverture d'aspiration (32, 34 ; 62) comprennent une bague de réglage (38).

9. Manchon selon la revendication 8,
**caractérisé en ce que**
la bague de réglage (38) possède au moins une languette (46, 48 ; 66, 68) qui recouvre au moins en partie l'ouverture d'aspiration (32, 34 ; 62).

10. Manchon selon la revendication 8 ou 9,
**caractérisé en ce que**
la bague de réglage (38) possède au moins une fente (56) axiale.

11. Manchon selon une des revendications 7 à 10,
**caractérisé en ce qu'**
au moins une graduation (52) indique le degré d'ouverture de l'ouverture d'aspiration (32, 34 ; 62).

12. Machine portative équipée d'un manchon selon une des revendications 1 à 11.
